# EUROPÄISCHE PATENTSCHRIFT

(11) **EP 0 729 396 B1**
(45) Veröffentlichungstag und Bekanntmachung des Hinweises auf die Patenterteilung: **25.02.1998**
(21) Anmeldenummer: 95900621.4
(22) Anmeldetag: 08.11.1994
(51) Int. Cl.: B23B 29/04, B23B 31/107

(54) **SPANNVORRICHTUNG ZUR VERBINDUNG EINES WERKZEUGKOPFES UND EINES WERKZEUGHALTERS AN WERKZEUGMASCHINEN**
CLAMPING DEVICE FOR CONNECTING A TOOLHEAD AND A TOOLHOLDER ON MACHINE TOOLS
DISPOSITIF DE SERRAGE POUR RACCORDER UNE TETE D'OUTIL ET UN PORTE-OUTIL SUR DES MACHINES-OUTILS

(30) Priorität: 15.11.1993 DE 4338953
(43) Veröffentlichungstag der Anmeldung: 04.09.1996
(73) Patentinhaber: Widia GmbH, 45145 Essen (DE)
(72) Erfinder: VON HAAS, Rainer, D-21502 Geesthacht (DE); TACK, Hans, D-42549 Velbert (DE); HUCHON, René, D-40468 Düsseldorf (DE)
(74) Vertreter: Vomberg, Friedhelm, Dipl.-Phys.
(86) Internationale Anmeldenummer: DE9401337
(87) Internationale Veröffentlichungsnummer: WO9513893

(56) Entgegenhaltungen:
- WO-A-93/09902

## Beschreibung

Die Erfindung betrifft Spannvorrichtung zur Verbindung eines Werkzeugkopfes und eines Werkzeughalters an Werkzeugmaschinen über zylindrische oder zumindest teilweise kegelige Aufnahmebohrung und einen entsprechend ausgebildeten Aufnahmezapfen, worin mittels einer drehbaren spiralig ausgebildete Führungen aufweisenden Spannwelle Spannelemente beim Spannen von innen nach außen in Ausnehmungen bewegbar sind, wodurch der Werkzeugkopf und der Werkzeughalter kraft- und formschlüssig verriegelbar sind.

Eine solche Spannvorrichtung wird in der EP 0 369 211 B1 beschrieben. Zum Spannen wird nur ein kurzer Spannweg benötigt, wobei durch eine starke Steigung der Spannbahnen am Anfang der Spannweg der Spannelemente relativ groß ist, während in einem nachfolgenden, wesentlich flacheren Teil der Spannbahn die erforderlichen hohen Spannkräfte aufgebracht werden.

Die DE 35 24 739 A1 beschreibt eine Spannvorrichtung mit einem konusförmigen Schaft eines Stahlhalters, der in einer konischen Aufnahmebohrung einer Kegelhülse lösbar angeordnet ist, die in einem Spannzylinder befestigt ist. Die Aufnahmebohrung weist eine Nut auf, in die Kugeln als Spannelemente durch einen axial mit einer Anpreßkraft beaufschlagbaren Zugring preßbar sind, der in der Kegelhülse gleitbar angeordnet ist. Am hinteren Endabschnitt der Kegelhülse ist ein Anschlagring vorgesehen, um die hintere Stellung des Zugringes mittels eines Schraubbolzens festlegen zu können. Zwischen diesem Anschlagring und einem weiteren Anschlagring für den hinteren Endabschnitt der Zugstange ist eine Druckfeder vorgesehen, um den Zugring und die Zugstange in axialer Richtung bewegen zu können. Hierzu dient ein Ring, durch den die Zugstange gleiten kann und auf dem die Druckfeder abgestützt ist. Die genannte Vorrichtung ist nachteiligerweise aufwendig aufgebaut.

Es ist Aufgabe der vorliegenden Erfindung, die eingangs genannte Spannvorrichtung weiterzuentwickeln, daß bei kurzen Spannwegen und kompakter Bauweise ein sicheres Spannen auch bei solchen Teilen der Spannvorrichtung möglich ist, deren Abmessungen größere Toleranzen von Sollmaß haben.

Diese Aufgabe wird durch die Spannvorrichtung nach Anspruch 1 gelöst, die erfindungsgemäß dadurch gekennzeichnet ist, daß die Spannwelle mindestens einen Anschlag zur Begrenzung des Drehwinkels beim Spannen besitzt und daß der Halter für die Spannelemente im Werkzeughalter federnd vorgespannt ist. Durch diese Vorspannung kann der Halter in axialer Richtung beim Spannen ausweichen, womit beispielsweise Maßungenauigkeiten der Teile der Spannvorrichtung Rechnung getragen werden kann. Der Anschlag verhindert auf einfache Weise eine Beschädigung der Spannelemente, die beim Spannen ohne Verwendung eines Drehmomentschlüssels oder durch zu große Spannkraftaufbringung droht.

Weiterbildungen der Erfindung sind in den Unteransprüchen beschrieben.

Vorzugsweise wird der Halter für die Spannelemente über eine Zugfeder, insbesondere Tellerfelder oder Tellerfedernpaket vorgespannt. Wegen ihrer geringeren Reibung bieten sich Kugeln als Spannelemente an, die in einem Kanister als Halter angeordnet sind. Insbesondere wenn die Spannwelle in einer Bohrung des Werkzeughalters angeordnet ist, die radial zur gemeinsamen Längsachse der Aufnahmebohrung und des Aufnahmezapfens im Werkzeughalter liegt, kann eine kompakte Bauweise geschaffen werden.

Für die Anschlagbegrenzung gibt es mehrere Möglichkeiten. Zum einen kann die Spannwelle einen Kopf aufweisen, in dessen Mantelfläche eine über einen Teilkreis führende Nut vorgesehen ist, in der ein Stift des Werkzeughalters so geführt ist, daß die Endflächen der Nut Anschläge zur Begrenzung des Drehwinkels der Spannwelle darstellen. Alternativ hierzu kann auch die Führung der Spannwelle für die Spannelemente eine kalottenförmige, im Radius den Spannelementformen angepaßte Mulde oder Mulden aufweisen. Sobald ein entsprechender Drehwinkel erreicht ist, fällt die Kugel in eine solche Mulde, was die Bedienungsperson leicht feststellen kann. Unter diesen Umständen ist ein unabsichtliches Überdrehen der Spannwelle ausgeschlossen.

Vorzugsweise und wie im Prinzip nach dem Stand der Technik bekannt, ist der Halter für die Spannelemente gegenüber dem Werkzeughalter gegen ein Verdrehen gesichert. Hierzu wird nach einer besonderen Ausgestaltung der Erfindung ein Stift als Verdrehsicherung verwendet.

Da nach der Werkstückbearbeitung die Werkzeugköpfe häufig im Werkzeughalter festsitzen oder durch die Konstruktion einer konischen Ausführung des Aufnahmezapfens des Werkzeugkopfes selbstklemmend im Werkzeughalter festliegen, ist es erforderlich, zum Lösen des Werkzeugkopfes ein sogenanntes Abdrückelement zu verwenden. Soweit wie nach dem Stand der Technik bekannt Abdrückelemente nicht durch hydraulische Zylinder betätigt werden, die das Abdrückelement gegen eine entsprechende Gegenfläche des Werkzeugkopfes pressen, bietet sich nach einer Weiterbildung der Erfindung eine Spannwellenausbildung an, die eine zweite spiralige Führung besitzt, mit der das Abdrückelement betätigt werden kann.

Um die Spannzeit zu verkürzen, sind die Führungen auf einen Drehwinkel von 20° bis 160° begrenzt. Unter dem Drehwinkel wird der Winkel verstanden, um den die Spannwelle zum Spannen oder Lösen des Werkzeugkopfes gedreht werden muß. Entsprechend lang auf dem Mantel der Spannwelle sind die Führungen ausgebildet, vorzugsweise mit einem Drehwinkel von 115°.

Nach einer weiteren Ausgestaltung der Erfindung beschreiben die Führungen eine stetige Raumkurve zweiter oder höherer Ordnung, deren Steigung - auf den Werkzeugspannvorgang bzw. das Abdrücken bezogen - kontinuierlich abnimmt, vorzugsweise hyperbolisch, exponentiell oder logarithmisch. Die genannten Ausführungsformen lassen sich so verwenden, daß durch eine kurze Spannbewegung am Anfang bei einer relativ großen Steigung der Spannweg der Spannelemente entsprechend groß ist und in einem folgenden wesentlich flacheren Teil die erforderlich hohen Spannkräfte stark ansteigen können. Entsprechendes gilt auch für das Abdrücken, wo zunächst hohe Kräfte erforderlich sind, bevor nach Überwindung des Haftreibungsschlusses es wesentlich mehr auf den höheren Spannweg ankommt.

Schließlich ist die Ausnehmung des Aufnahmezapfens des Werkzeugkopfes für die Spannkugeln als Bohrung oder Ringnut ausgebildet und/oder weist eine Seitenfläche auf, die als Schräge ausgebildet ist.

Nach einer weiteren Ausgestaltung der Erfindung besitzen die Führungen einen Scheitelpunkt (Totpunkt) bis zu dessen Erreichen während des Spannvorganges die Spannelemente stetig weiter radial nach außen gedrückt werden und bei dessen Überschreiten die Kugeln in die Spannstellung übergehen.

Ein Ausführungsbeispiel für die Erfindung ist in den Zeichnungen dargestellt. Es zeigen
- Fig. 1: eine Schnittansicht durch einen Werkzeughalter,
- Fig. 1a: eine Seitenansicht durch einen Werkzeughalter und Werkzeugkopf,
- Fig. 2: eine Seitenansicht einer Spannwelle,
- Fig. 3: eine Schnittansicht entland der Linie III - III,
- Fig. 4: eine Seitenansicht durch einen Werkzeughalter mit elastischem Formelement.

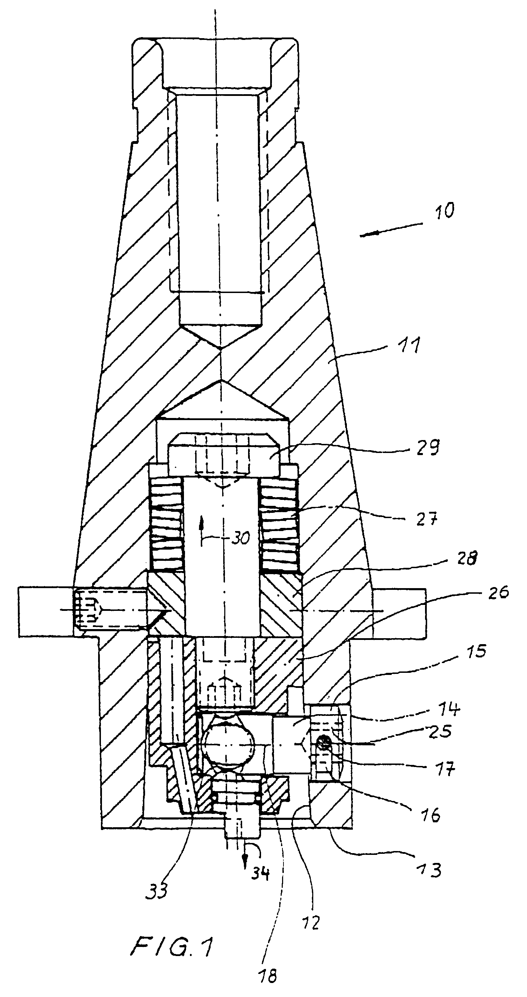

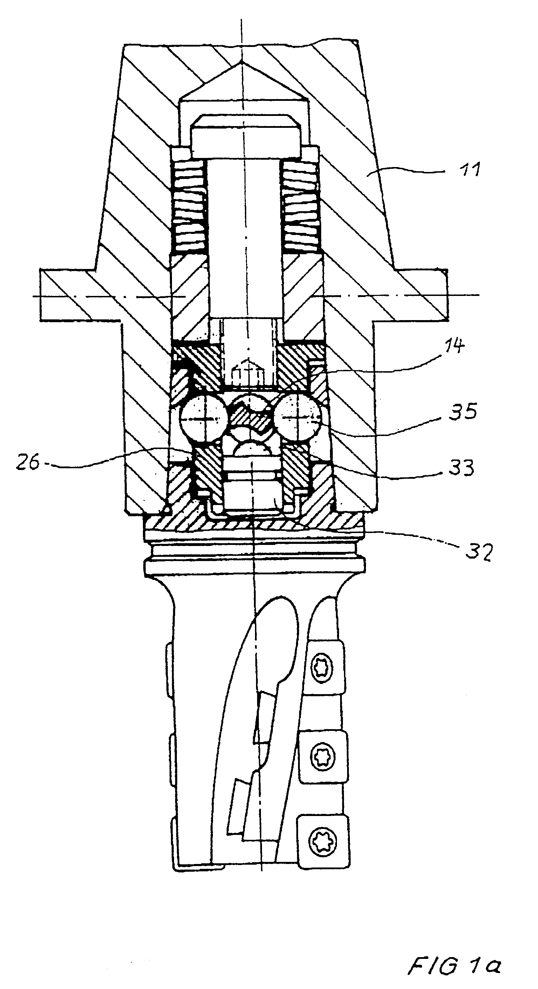

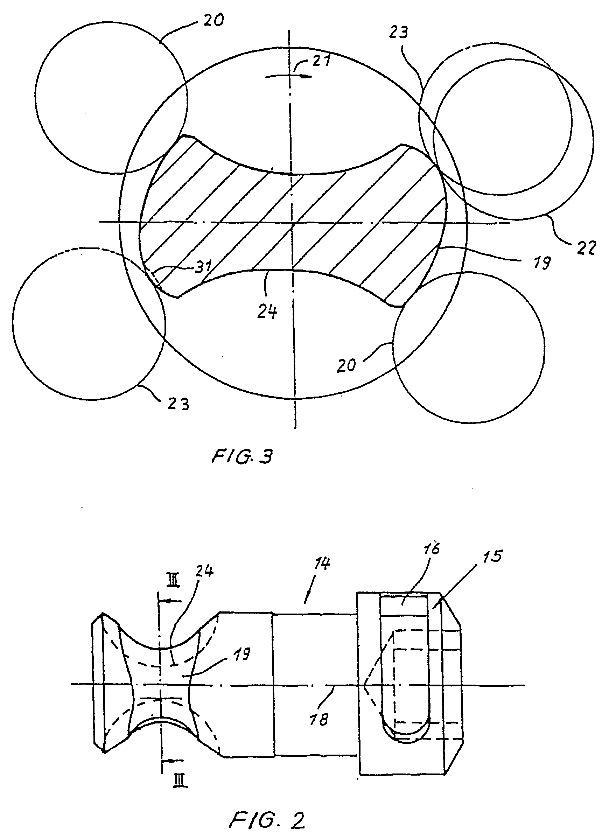

Der in Fig. 1 dargestellte Werkzeughalter 10 besitzt einen konischen Schaft 11 zur Aufnahme an einer Werkzeugmaschine, einer Revolverscheibe oder ähnlichem. Der Werkzeughalter besitzt eine konische Aufnahmebohrung 12, in die ein entsprechend geformter Aufnahmezapfen eines Werkzeughalters geführt werden kann. Hierbei kommt der ringförmige Anlagebund 13 des Werkzeughalters mit dem Werkzeugkopf zur Anlage. Die Spannvorrichtung besteht aus einer radial angeordneten Spannwelle 14, die in Fig. 2 und 3 näher dargestellt ist. Diese Spannwelle besitzt einen Kopf 15, in dessen Außenmantel eine über einen Winkel von 115° reichende Nut 16 eingefräst ist. Diese Nut dient als Führung für einen mit dem Grundhalter verbundenen Stift 17, wobei die jeweiligen Endflächen der Nut 16 als Anschläge dienen, um den Drehwinkel der Spannwelle 14 zu begrenzen. Die um ihre Längsachse 18 drehbare Spannwelle besitzt an ihrem Mantel eine Spann- und Ausstoßbahn 19, deren Verlauf Fig. 3 näher zu entnehmen ist. Über diese spiralförmigen Führungen 19, bei denen es sich im Prinzip um Raumkurven zweiter oder höherer Ordnung handelt, kann durch eine relativ große Steigung zu Beginn des Spannens der Spannweg bei kurzer Spannbewegung relativ groß gewählt werden. Die in ihrer ersten Stellung, bei der die Plananlage 13 des Halters mit der betreffenden ringförmigen Plananlage des Werkzeugkopfes Kontakt hat, ist mit Bezugszeichen 20 angedeutet. Die Spannkugel erreicht bei Drehung der Spannwelle um die Längsachse (siehe Pfeil 21) bei 22 die höchste Stellung und hierüber bei 23 die Spannstellung, wobei im letzten Teil der Kurve, d.h. von Stellung 22 zu Stellung 23 die Spannwege deutlich kleiner sind, um hier große Kräfte aufbringen zu können. In die Ausnehmungen 24 fallen die Spannkugeln in gelöstem Zustand. Die Spannwelle kann über einen Inbus 25 betätigt werden. Der Werkzeuggrundhalter 10 besitzt weiterhin einen Halter 26 für die nicht dargestellten Spannkugeln, der mittels eines Tellerfederpaketes 27, das sich gegen einen Ring 28 einerseits und den Kopf 29 einer mit dem Kanister 26 fest verbundenen Schraube abstützt. Durch die Federn 27 wird in Richtung des Pfeiles 30 ein Zug auf den Halter 26 ausgeübt.

Anstelle des Anschlages über die Nut 16 in Verbindung mit dem Stift 17 kann auch eine kalottenförmige Ausnehmung 31 in der Spannbahn 19 vorgesehen werden, wie dies in der linken Hälfte der Fig. 3 angedeutet ist. Beim Spannen läßt nämlich für die Bedienungsperson merklich der gegen die Spannbewegung wirkende Druck nach, sobald die Kugel in der Spannstellung in die Kalotte fällt. Die Bedienungsperson kann auch so (d.h. ohne Anschläge) erkennen, wann die Spannstellung erreicht ist.

Der Vorteil der vorliegenden Spannvorrichtung liegt darin, daß der Halter 26 beim Spannen gegen die Kraft der Feder 27 axial ausweichen kann, so daß die Spannvorrichtung auch bei Fertigungsungenauigkeiten vor einer Beschädigung geschützt ist. Die Maßtoleranzen können somit größer gewählt werden, im Einzelfall sind Toleranzen bis zu 5/10 mm zulässig. Durch den federnd vorgespannten Halter 26 in Verbindung mit dem in einer radialen Bohrung des Halters geführten Spannwelle 14 läßt sich eine kompakte Bauweise mit hoher Steifigkeit realisieren. Die aufzuwendende Federkraft richtet sich nach der Werkzeughaltergröße und kann bis zu 4 Tonnen entsprechen. Selbstverständlich kann anstelle der Tellerfedern 27 auch eine Schraubenfeder, die in eine wendelförmige Nut des Halters 26 eingreift verwendet werden und deren freies Ende beispielsweise über einen Bolzen oder ähnliches mit dem Werkzeuggrundhalterkörper fest verbunden ist.

Nach einer Ausgestaltung der Erfindung kann mit nur einer Spannkurve der Spann- und Löse/Abstoßvorgang durchgeführt werden. Dies wird nur durch die spezielle Ausbildung der Spannkurve an der Spannwelle und die kugelförmige Gestaltung des Abdrückstückes möglich.

Die axiale Nachgiebigkeit des Halters (Kanisters) ist hauptsächlich deshalb erforderlich, um in jedem Fall den oberen Scheitelpunkt des Spannkurve erreichen und überschreiten zu können. Die axiale Verschiebung des Halters erlaubt, die mechanische Überbestimmung zu umgehen.

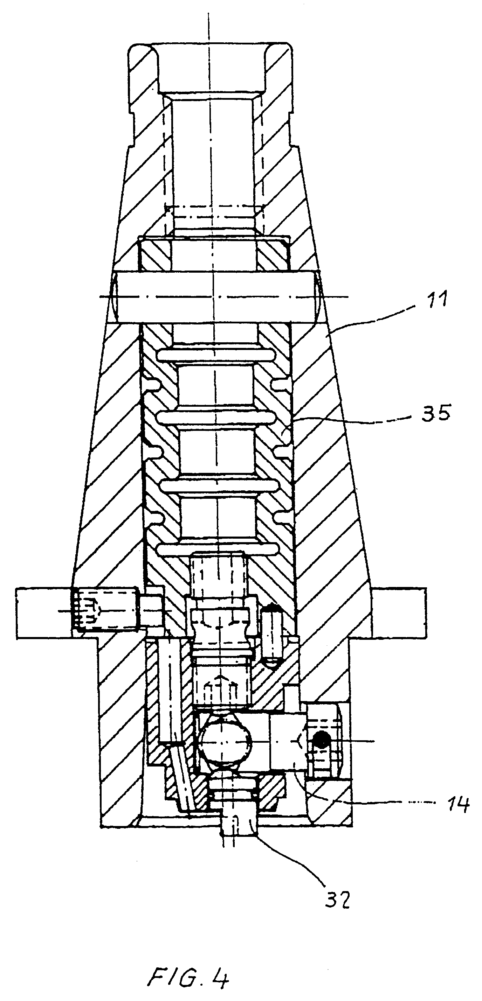

Weiterhin sind flexible Formelemente (Fig. 4) möglich, die mit dem Halter (Kanister) 26 fest verbunden sind oder aber auch mit ihm eine einteilige Baueinheit bilden.

Das Lösen der Spannung bzw. Ausstoßen des Werkzeugkopfes geschieht dadurch, daß die Spannwelle 14 entgegen der Pfeilrichtung 21 gedreht wird, so daß die Spannkugeln aufgrund der abnehmenden Steigung der Spannbahnen 19 entlastet werden, bis sie schließlich, durch einen Anschlag in der Nut 16 des Kopfes 15 begrenzt, die Endstellung erreicht und die Kugeln in die Ausnehmungen 24 fallen.

Beim Entspannen muß zunächst wiederum ein etwas höheres Drehmoment (Lösemoment) aufgebracht werden, um die höchste Stellung 22 der Spannbahn 19 zu überwinden. Dieses höhere Drehmoment stellt gleichzeitig eine gute Sicherheit gegen unbeabsichtigtes Lösen der Spannung, z.B. durch Schwingungen, dar.

Das eigentliche Herausdrücken des Werkzeugkopfes wird dadurch erreicht, daß beim Drehen der Spannwelle 14 entgegen der Pfeilrichtung 21 der steile, im linken unteren Bereich von Fig. 3 dargestellte Teil der Spannbahn 19 mit dem kugelförmig gestalteten Druckteil 33 des Abdrückstückes 32 zusammenwirkt. Sobald die höchste Stelle 22 der Spannkurve 19 das Druckstück 32 an der kugelförmig ausgebildeten Endstelle passiert, erreicht das Druckstück 32 den Maximalwert der Ausstoßrichtung 34, der so bemessen ist, daß der Werkzeugkopf sicher ausgestoßen wird.

Die Führungen der Spannwelle werden im einzelnen in der EP 0 369 211 B1 erläutert, auf die ausdrücklich Bezug genommen wird.

## Patentansprüche

1. Spannvorrichtung zur Verbindung eines Werkzeugkopfes und eines Werkzeuhalters (10) an Werkzeugmaschinen über eine zylindrische oder zumindest teilweise kegelige Aufnahmebohrung (12) und einen entsprechend ausgebildeten Aufnahmezapfen, worin mittels einer drehbaren, spiralig ausgebildete Führungen (19) aufweisenden Spannwelle (14) Spannelemente beim Spannen von innen nach außen in Ausnehmungen bewegbar sind, wodurch der Werkzeugkopf und der Werkzeughalter (10) kraft- und formschlüssig verriegelbar und abstoßbar ist,
**dadurch gekennzeichnet,**
daß die Spannwelle (14) mindestens einen Anschlag zur Begrenzung des Drehwinkels beim Spannen besitzt und daß der Halter (26) für die Spannelemente im Werkzeughalter (10) federnd vorgespannt ist.

2. Spannvorrichtung nach Anspruch 1, dadurch gekennzeichnet, daß der Halter (26) für die Spannelemente über eine Zugfeder, vorzugsweise eine Tellerfeder oder ein Tellerfederpaket (27) vorgespannt ist und/oder daß der Halter (26) ein Kugeln als Spannelemente aufweisender Kanister ist.

3. Spannvorrichtung nach Anspruch 1 oder 2, dadurch gekennzeichnet, daß die Spannwelle (14) in einer Bohrung des Werkzeughalters (10) radial zur gemeinsamen Längsachse der Aufnahmebohrung (12) und des Aufnahmezapfens im Werkzeughalter (10) angeordnet ist und/oder daß die Spannwelle (14) einen Kopf (15) aufweist, in dessen Mantelfläche eine über einen Teilkreis führende Nut (16) vorgesehen ist, in der ein Stift (17) des Werkzeughalters (10) so geführt ist, daß die Endflächen der Nut (16) Anschläge zur Begrenzung des Drehwinkels der Spannwelle (14) darstellen.

4. Spannvorrichtung nach einem der Ansprüche 1 bis 3, dadurch gekennzeichnet, daß die Führung (19) der Spannwelle (14) für die Spannelemente eine kalottenförmige, im Radius den Spannelementformen angepaßte Mulde (31) oder Mulden aufweist.

5. Spannvorrichtung nach einem der Ansprüche 1 bis 4, dadurch gekennzeichnet, daß der Halter (26) für die Spannelemente gegenüber dem Werkzeughalter (10) gegen ein Verdrehen gesichert ist, vorzugsweise durch einen Stift als Verdrehsicherung.

6. Spannvorrichtung nach einem der Ansprüche 1 bis 5, dadurch gekennzeichnet, daß die in der Spannwelle (14) eingebrachte spiralige Führung so gestaltet ist, daß sie auch zur Betätigung eines Abdrückelementes (32) geeignet ist.

7. Spannvorrichtung nach einem der Ansprüche 1 bis 6, dadurch gekennzeichnet, daß die den Drehwinkel der Spannwelle bestimmende Führung (16) über einen Drehwinkel von 20° bis 160°, vorzugsweise 115°, läuft.

8. Spannvorrichtung nach einem der Ansprüche 1 bis 7, dadurch gekennzeichnet, daß die Führung (19) der Spannwelle eine stetige Raumkurve zweiter oder höherer Ordnung beschreibt, deren Steigung - auf den Werkzeugspannvorgang bzw. das Abdrücken bezogen - kontinuierlich abnimmt und/oder daß die Führung (19) eine hyperbolische, exponentielle oder logarithmische Schraubenlinie im Raum beschreibt.

9. Spannvorrichtung nach einem der Ansprüche 1 bis 8, dadurch gekennzeichnet, daß die Ausnehmung des Aufnahmezapfens des Werkzeugkopfes für die Spannkugeln als Bohrung oder Ringnut ausgebilet sind und/oder daß die Ausnehmung des Aufnahmezapfens eine Seitenfläche aufweist, die als Schräge ausgebildet ist, entlang der die Spannkugeln beim Spannvorgang geführt werden.

10. Spannvorrichtung nach einem der Ansprüche 1 bis 9, dadurch gekennzeichnet, daß die Führungen (19) einen Scheitelpunkt (Totpunkt) aufweisen, bis zu dessen Erreichen während des Spannvorganges die Spannelemente stetig weiter nach außen gedrückt werden und bei dessen Überschreiten die Kugeln in die Spannstellung übergehen.

## Claims

1. Clamping device for connecting a tool head and a tool holder (10) to machine tools by means of a cylindrical or at least partly conical location hole (12) and a correspondingly shaped centering pivot, wherein clamping elements can be moved from the inside to the outside into recesses during the clamping process by means of a rotatable clamping shaft (14) equipped with helical guides (19), whereby the tool head and the tool holder (10) can be locked and ejected by means of friction and positive interlocks, characterised in that the clamping shaft (14) has at least one stop to limit the angle of rotation during clamping and that the holder (26) for the clamping elements is spring-loaded prestressed in the tool holder (10).

2. Clamping device according to claim 1, characterised in that the holder (26) for the clamping elements is prestressed by means of a tension spring, preferably a Belleville spring or a packet of Belleville springs (27) and/or that the holder (26) is a canister containing balls as clamping elements.

3. Clamping device according to claim 1 or 2, characterised in that the clamping shaft (14) is located in a bore of the tool holder (10), oriented radially with respect to the common longitudinal axis of the location hole (12) and the centering pivot in the tool holder (10) and/or that the clamping shaft (14) has a head (15) with a semicircular groove (16) cut into its outer surface, in which groove a pin (17) of the tool holder (10) is guided, so that the end faces of the groove (16) represent stops to limit the angle of rotation of the clamping shaft (14).

4. Clamping device according to one of the claims 1 to 3, characterised in that the guide (19) for the clamping shaft (14) for the clamping elements has a dome-shaped trough (31) or troughs whose radius/radii has/have been modified to correspond to the shapes of the clamping elements.

5. Clamping device according to one of claims 1 to 4, characterised in that the holder (26) for the clamping elements is secured against rotation relative to the tool holder (10), preferably by a pin as protection against rotation.

6. Clamping device according to one of claims 1 to 5, characterised in that the helical guide in the clamping shaft (14) is designed so that the guide can also be used to actuate an ejector element (32).

7. Clamping device according to one of claims 1 to 6, characterised in that the guide (16) which determines the angle of rotation of the clamping ranges from an angle of rotation from 20°C to 160°C, preferably 115°C.

8. Clamping device according to one of claims 1 to 7, characterised in that the guide (19) of the clamping shaft describes a continuous second order or higher order three dimensioned curve, whose slope decreases steadily-relative to the tool clamping process or ejection and/or that the guide (19) describes hyperbolic, exponential or logarithmic helix.

9. Clamping device according to one of claims 1 to 8, characterised in that the recess of the centering pivot of the tool head is realised as a bore annular groove for the clamping balls and/or that the recess of the centering pivot has an end surface which is bevelled, along with the clamping balls move during clamping.

10. Clamping device according to one of claims 1 to 9, characterised in that the guides (19) have an apex point (dead point), whereby until this point is reached during the clamping process, the clamping elements are displaced increasingly radially outward and when this point is passed, the balls move into the clamping position.

## Revendications

1. Dispositif de serrage pour raccorder une tête d'outil et un porte-outil (10) sur des machines-outils par l'intermédiaire d'un perçage de positionnement (12) cylindrique ou au moins en partie conique et d'un nez de centrage formé de façon correspondante, où des éléments de serrage peuvent être déplacés de l'intérieur vers l'extérieur dans des creux durant le serrage par le biais d'un arbre de serrage (14) tournant présentant des guides (19) réalisés de façon hélicoïdale, ce par quoi la tête d'outil et le porte-outil (10) peuvent être verrouillés et éjectés par adhérence et engagement positif,
**caractérisé par le fait**
que l'arbre de serrage (14) possède du moins une butée déstinée à limiter l'angle de rotation lors du serrage et que le support (26) pour les éléments de serrage est précontraint élastiquement dans le porte-outil (10).

2. Dispositif de serrage selon la revendication 1, caractérisé par le fait que le support (26) pour les éléments de serrage est précontraint par le biais d'un ressort de traction, de préférence un ressort Belleville ou un bloc de ressorts Belleville (27) et/ou que le support (26) est un bidon présentant des billes en tant qu'éléments de serrage.

3. Dispositif de serrage selon la revendication 1 ou 2, caractérisé par le fait que l'arbre de serrage (14) est disposé dans un perçage du porte-outil (10), radialement par rapport à l'axe longitudinal commun du perçage de positionnement (12) et du nez de centrage dans le porte-outil (10), et/ou que l'arbre de serrage (14) présente une tête (15) dans la surface latérale de laquelle est prévue une rainure (16) s'étendant sur un cercle partiel, dans laquelle une broche (17) du porte-outil (10) est guidée de telle manière que les surfaces terminales de la rainure (16) constituent des butées destinées à limiter l'angle de rotation de l'arbre de serrage (14).

4. Dispositif de serrage selon l'une des revendications 1 à 3, caractérisé par le fait que le guide (19) de l'arbre de serrage (14) pour les éléments de serrage présente un creux (31) ou des creux en forme de calotte, dont le rayon ou les rayons a ou ont été adapté(s) aux formes des éléments de serrage.

5. Dispositif de serrage selon l'une des revendications 1 à 4, caractérisé par le fait que le support (26) pour les éléments de serrage est bloqué contre une rotation par rapport au porte-outil (10), de préférence par le biais d'une broche utilisée en tant que dispositif protecteur contre une rotation.

6. Dispositif de serrage selon l'une des revendications 1 à 5, caractérisé par le fait que le guide hélicoïdal réalisé dans l'arbre de serrage (14) est formé de telle manière qu'il se prête également à actionner un éjecteur (32).

7. Dispositif de serrage selon l'une des revendications 1 à 6, caractérisé par le fait que le guide (16) déterminant l'angle de rotation de l'arbre de serrage s'étend sur un angle de rotation de 20° à 160°, de préférence de 115°.

8. Dispositif de serrage selon l'une des revendications 1 à 7, caractérisé par le fait que le guide (19) de l'arbre de serrage décrit une courbe continue en trois dimensions d'ordre secondaire ou plus grand dont la pente - par rapport au processus de serrage de l'outil ou bien à l'éjection - diminue de façon continue et/ou que le guide (19) décrit une hélice hyperbolique, exponentielle ou logarithmique dans l'espace.

9. Dispositif de serrage selon l'une des revendications 1 à 8, caractérisé par le fait que le creux du nez de centrage de la tête d'outil est réalisé en tant que perçage ou rainure annulaire pour les billes de serrage, et/ou que le creux du nez de centrage présente une face latérale qui est réalisée comme biais le long duquel les billes de serrage sont guidées durant l'opération de serrage.

10. Dispositif de serrage selon l'une des revendications 1 à 9, caractérisé par le fait que les guides (19) présentent un point culminant (point mort); jusqu'à ce que ce point soit atteint durant l'opération de serrage, les éléments de serrage étant poussés constamment encore plus vers l'extérieur et, lorsque ledit point est dépassé, les billes se déplaçant dans la position de serrage.
